(19) Europäisches Patentamt
European Patent Office
Office européen des brevets

(11) **EP 2 996 067 A1**

(12) **EUROPEAN PATENT APPLICATION**
published in accordance with Art. 153(4) EPC

(43) Date of publication:
**16.03.2016 Bulletin 2016/11**

(51) Int Cl.:
***G06K 9/00*** *(2006.01)*

(21) Application number: **14794946.5**

(22) Date of filing: **05.05.2014**

(86) International application number:
**PCT/CN2014/076800**

(87) International publication number:
**WO 2014/180291 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.05.2013 CN 201310166011**

(71) Applicant: **Li, Dongge**
**Wuhan, Hubei 430063 (CN)**

(72) Inventor: **Li, Dongge**
**Wuhan, Hubei 430063 (CN)**

(74) Representative: **Potter Clarkson LLP**
**The Belgrave Centre**
**Talbot Street**
**Nottingham NG1 5GG (GB)**

(54) **METHOD AND DEVICE FOR GENERATING MOTION SIGNATURE ON THE BASIS OF MOTION SIGNATURE INFORMATION**

(57) Disclosed are a method and device for generating a motion signature on the basis of motion signature information. A detection is made on whether or not an activation-triggering criterion or generating the motion signature on the basis of the motion signature information is satisfied; when the activation-triggering criterion is satisfied, the motion feature information corresponding to a motion is determined on the basis of a detection of the motion that corresponds to the activation-triggering criterion; the motion signature information is encoded, and, the motion signature corresponding to the motion signature information is generated.

FIGURE 3

EP 2 996 067 A1

## Description

Technical Field

The invention relates to the field of computer technology, especially a technology that generates motion signature on the basis of motion signature information.

Background

A motion signature generated based on motion pattern, capturing motion pattern and generating corresponding motion signature by MEMS or camera device, can be used as a password or can be matched to verify the device on-site detected by sensors. For example, motion signature can be used as the password to unlock or activate devices such as door control and payment device, etc., which can also use the motion tracking code as the command code of devices to send or receive information, execute and confirm function, etc.

Therefore, improving the accuracy and efficiency of generating motion signature based on motion signature information has become a problem in need of an urgent solution in the field.

Summary

The present invention aims to provide a method and device for generating motion signature based on motion signature information.

According to an aspect of the present invention, there is provided a method for generating motion signature on the basis of motion signature information, the method shall comprise of the following steps:

a. Detecting whether or not the activation-triggering criterion for generation of the motion signature based on the motion signature information is satisfied.

b. When the activation-triggering criterion is satisfied, determining, on the basis of the detection of the motion that corresponds to the activation-triggering criterion, the motion signature information corresponding to the motion.

c. Encoding the motion signature information, and, generating the motion signature corresponding to the motion signature information.

According to another aspect of the present invention, there is provided a motion generation device for generating motion signature based on motion signature information, the device comprises of the following units:

A detection unit which detects whether or not the activation-triggering criterion for generation of a motion signature on the basis of the motion signature information is satisfied.

A determination unit which determines, on the basis of the detection of the motion that corresponds to the activation-triggering criterion, the motion signature information corresponding to the motion when said activation-triggering criterion is satisfied.

A generation unit which encodes the motion signature information and generates a motion signature corresponding to the motion signature information.

Compared with existing technology, the present invention has improved the accuracy and efficiency of generating motion signature as well as user experience by detecting the activation-triggering criterion for generation of the motion signature based on when the motion signature information is satisfied, determining, based on the detection of the motion that corresponds to the activation-triggering criterion, the motion signature information corresponding to the motion, then, encoding the motion signature information, and, generating the motion signature corresponding to the motion signature information.

Brief Description of the Figures

Other objects, signatures, and advantages of the present invention will become apparent upon consideration of the following detailed description of non-limiting embodiments and the accompanying drawings.

FIG. 1 illustrates a device diagram of generating motion signature on the basis of motion signature information according to an aspect of the present invention.

FIG. 2 illustrates a device diagram of generating motion signature on the basis of motion signature information according to a preferred embodiment of the present invention.

FIG. 3 illustrates a method flow chart of generating motion signature on the basis of motion signature information according to another aspect of the present invention.

FIG. 4 illustrates a method flow chart of generating motion signature on the basis of motion signature information according to a preferred embodiment of the present invention.

The same or similar symbols in the drawings indicate the same or similar units.

Detailed Description of the Preferred Embodiment

With drawings show the following instructions to further elaborate the details of this invention.

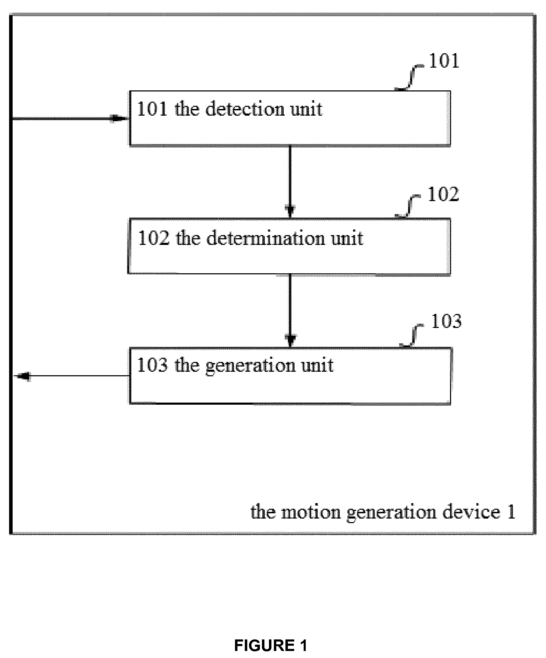

FIG. 1 illustrates a device diagram of generating motion signature based on motion signature information according to an aspect of the present invention. The motion generation device 1 includes the detection unit 101, the determination unit 102 and the generation unit 103.

Among which, the detection unit 101 detects whether or not the activation-triggering criterion for generation of the motion signature on the basis of the motion signature information is satisfied, wherein, the activation-triggering criterion as described shall comprise any of the following,

- Get the predetermined activation-triggering information for generation of the motion signature information,
- Detect the predetermined input target object from the captured initial image,
- Detect the predetermined motion pattern from the captured motion image. For example, a user can send a start signal by clicking or long-press the specific button on the mobile terminal or wearable device as interaction, the detection unit 101 interacts with the mobile terminal or interactive wearable device, such as WIFI, Bluetooth, Infrared, Internet or other agreed communication modes to get the start information, and determines the activation-triggering criterion for generation of the motion signature on the basis of the motion signature information being satisfied.

As another example, base on the initial image captured by the device, the detection unit 101 detects whether or not the predetermined input target object is included in the acquired initial image by image recognition, etc., such as detecting whether or not the satisfied region is included in the initial image, such as skin area, face, and other shaped objects, when the above input target object is detected, determines the activation-triggering criterion for generation of the motion signature on the basis of the motion signature information being satisfied.

Further, the motion image captured by the image device, the detection unit 101 detects whether or not the predetermined motion pattern is included in the captured motion image by image recognition, etc., such as segmenting the different motion regions of the motion image through optical flow analysis, or detecting the motion image to get the general direction and size as the motion mode of the image, for example, using the pixels motion of motion-range of the image, get the size and direction of the most votes for the general direction and size, when the multi-frame motion appears qualified motion pattern, that is, when the predetermined motion pattern is detected, determines the activation-triggering criterion for generation of the motion signature on the basis of the motion signature information being satisfied.

However, it is understood by those skilled in the art that the above activation-triggering criterion only by way of example, other existing or potential activation-triggering criteria that may be applicable to this invention should belong in the scope of protection of the invention by reference.

The determination unit 102, when the activation-triggering criterion is satisfied, determines, on the basis of the detection of the motion that corresponds to the activation-triggering criterion, the motion signature information corresponding to the motion. Specifically, when the detection unit 101 detects that the activation-triggering criterion for generation of the motion signature on the basis of the motion signature information is satisfied, the determination unit 102 determines the motion signature information, such as motion velocities, accelerations and motion directions relative changes through detecting the motion that corresponds to the activation-triggering criterion by MEMS sensors, two-dimensional image device and three-dimensional image device etc.

Preferably, the determination unit 102 comprises a sensor detection device, wherein, the sensor detection device as described shall comprise any of the following,

- MEMS sensor,
- Two-dimensional image device,
- Three-dimensional image device.

However, it is understood by those skilled in the art that, while the above sensor detection device has been provided only by way of example, other existing or potential sensor detection device that are applicable to this invention should belong in the scope of protection of the invention by reference.

The generation unit 103 encodes the motion signature information and generates the motion signature corresponding to the motion signature information. Specifically, the generation unit 103 generates the motion signature corresponding to the motion signature information according to the motion signature information determined by the determination unit 102 through a certain encoding methods, such as Fourier shape descriptor method, geometric parameter method, shape invariant moment method, rotation function method, wavelet descriptor method, etc. For example, generation unit 103 generates the motion signature corresponding to the signature, the edge and the contour etc. information of a motion trajectory shape, or, generates the motion signature on the basis of the motion trajectory velocities, accelerations and motion directions relative changes etc. information of the motion image.

For example, the generation unit 103 describes and encodes the motion image on the basis of its motion shape feature, i.e., to generate corresponding motion signature information, such as encode the two-dimensional or three-dimensional motion trajectory directly though the shape and contour encoding methods, or, confined encode the time-series sequence and the shape feature, similar to the principle of smart phones grid screen lock, that is, the different sequence of the generated trajectory affects encoding output. Encoding methods include Fourier shape descriptor method, geometric parameter method, shape invariant moment method, rotation function method, wavelet descriptor method, etc.

As another example, the generation unit 103 uses gesture recognition technology to recognize users' gestures, such as thumb up, palm, fist etc. gestures. The generation unit 103 uses motion tracking to identify the motion pattern of users' gestures, such as wave hands, draw "Z" word, write Chinese characters in the air etc., or, the user may use wearable device. The generation unit 103 can determine the user's gesture through wearable computing, such as the user opens palm, make a fist, then wave etc. gestures. The generation unit 103 can encode gestures and motion patterns, such as encodes the written Chinese characters or English with the corresponding encoding of Chinese characters and ASCII code, different codes for different gestures. These different codes connect to become longer codes, such as gesture 2 with the code 02, namely raising index finger and middle finger, the code for drawing "M" is 109, and then the code for drawing "M" with gesture 2 is 020109.

However, it is understood by those skilled in the art that the above generation mode of the motion signature information only by way of example, other existing or potential generation mode of the motion signature information that are applicable to this invention should belong in the scope of protection of the invention by reference.

Wherein, the encoding process as described shall comprise any of the following,

- Encoding form conversion process,
- Encoding packing process,
- Encoding compression process,
- Encoding encryption process.

However, it is understood by those skilled in the art that the above encoding process modes are provide only by way of example, other existing or potential encoding process mode that may be applicable to this invention should belong in the scope of protection of the invention by reference.

Preferably, the activation-triggering criterion comprises detecting the predetermined input target object from the captured initial image, wherein the determination unit 102 comprises an acquisition unit (not shown) and a determining unit (not shown). When the activation-triggering criterion of the acquisition unit is satisfied, the unit obtains the motion image information of the input target object, and the determining unit determines the motion image information of the input target object based on the motion image information.

Specifically, once the initial image is captured by the image device, the detection unit 101 detects whether or not the predetermined input target object is included in the acquired initial image by image recognition, etc., such as detecting whether or not the satisfied region is included in the initial image, such as skin area, face, and other shaped objects. When the above input target object is detected, the determination unit determines the activation-triggering criterion for generation of the motion signature on the basis of the motion signature information being satisfied.

Subsequently, when the activation-triggering criterion is satisfied, through video tracking etc. method, the acquisition unit tracks the input target object detected by the detection unit 101 to obtain the motion image information as the motion image that corresponds to the activation-triggering criterion. Next, on the basis of the obtained motion image of the acquisition unit, the motion trajectory information, motion trend information, or combined with the input target object information, the determining unit determines the motion signature information of the input target object, for example, generates the motion signature information of the input target object corresponding to the signature, the edge and the contour etc. information of the motion trajectory shape.

For example, the motion signature generation device 1 can use two-dimensional or three-dimensional image device to capture motion pattern and generate motion signature information. The motion signature information generated by two-dimensional image device is equivalent to the two-dimensional code of the motion plane mapping trace. In this case, the two-dimensional or three-dimensional image device obtains an initial image, the detection unit 101 detects the predetermined input target object in the initial image, and the acquisition unit tracks the input target object through video tracking etc. method, the determining unit determines the motion signature information of the input target object on the basis of the motion trajectory information.

Here, the detection unit 101 detects the satisfied region as the input target object by image recognition, like skin area, face, and other shaped objects. Preferably, through video tracking method, the acquisition unit can track one or more of the target motion simultaneously, wherein generating the motion signature information based on motion signature.

Preferably, the motion signature information shall further comprise the motion trajectory information of the input target object, wherein the generation unit 103 encodes the motion trajectory information and generates the motion signature corresponding to the motion trajectory information. Specifically, the determination unit 102 determines the motion trajectory information of the input target object based on the acquired motion image, for example, determines the motion trajectory information of the input target object like the signature, the edge and the contour etc. information of the motion trajectory shape through image recognition and analysis, the generation unit 103 generates the motion signature of the input target object according to the motion trajectory information through a certain encoding methods, such as Fourier shape descriptor method, geometric parameter method, shape invariant moment method, rotation function method, wavelet descriptor method, etc. Preferably, only when the detection unit 101 detects the specific motion of the input target object in the initial image, the generation unit 103 will generate the corresponding motion signature or output the generated motion signature, such as the input target object will generate a valid motion signature after at least one time sloshing back and forth, or it will be not considered.

Preferably, the motion signature generation device 1 also includes a dimension reduction unit (not shown), which reduces the dimension of the motion signature information to obtain the motion signature information after dimension reduction, the generation unit 103 encodes the dimension reduced motion signature information and generates the motion signature of the input target object. Specifically, the dimension reduction unit reduces the dimension of the motion signature information according to the motion signature information determined by the determination unit 102 through mapping etc. method, for example, reduces the dimension of the three-dimensional motion signature information into the two-dimensional motion signature information, then, the generation unit 103 encodes the dimension reduced motion signature information through encoding packing process, encoding compression process, encoding encryption process etc., and generates the motion signature of the input target object.

Preferably, this dimension reduction unit reduces the motion signature information from the three-dimensional space into the two-dimensional plane, wherein the two-dimensional plane as described shall comprise any of the following,

- Image acquisition plane,
- Two-dimensional fitting plane,
- Vertical fitting plane,
- Direction towards the equipment fitting plane.

In this case, since the motion is produced in three-dimensional space, some remote sensing devices (such as the common image device) can only capture the motion signature of two-dimensional space, while other remote sensing devices (such as three-dimensional image device or MEMS) can capture the three-dimensional motion trajectory. Therefore, the dimension reduction of the motion image can resolve the differences caused by different capture devices, such as project a motion of the three-dimensional space onto a specific two-dimensional space. Dimension reduction or projection mode including but not limited to,

1) base on the known image plane (for example, before use, set the image plane relative to the geodetic coordinate direction in the system by the image device direction provided by Compass etc. sensors or other similar calibration process, the image device direction can be easily given if the image device has Compass, etc. orientation sensor),
2) calculate the two-dimensional fitting plane closest to the three-dimensional motion direction by principal axes analysis the three-dimensional motion trajectory, and to take the plane composed of the maximum two axes, that is, the two-dimensional fitting plane that minimum error estimation of three-dimensional motion distribution.
3) similar to 2), but the minimum error plane here is vertical, one calculation method is to project the three-dimensional trajectory onto the two-dimensional horizontal direction, then principal axes analysis its two-dimensional horizontal plane distribution to take the maximum axis direction, the decided vertical plane is vertical plane with the minimum fitting error,
4) take the vertical direction of the device average orientation as the projection direction.

The image device direction can be easily given if the image device has Compass, etc. orientation sensor. The positional relation of the three-dimensional and two-dimensional image plane is also determined. Likewise, the relative direction of any two image devices can be easily obtained. If there is no direction sensor, the traditional image calibration method can also detect the relative direction between different image devices planes (relative calibration) or the absolute position relation of the any image device relative to the earth (absolute calibration). The specific method of relative calibration comprises finding the corresponding set of points in the image provided by two image devices manually or automatically, for example, at least eight points or three round holes. The specific method of absolute calibration is to calculate the external parameters of the image device through the given geodetic coordinates of a set of points or image device calibration method, then determine the relative position between the image devices or the absolute position of the image device in the world coordinate system. Current image device calibration methods can be divided into the traditional image device calibration method and the image device self-calibration method. The traditional method generally requires calibration block (three-dimensional or two-dimensional) as the spatial reference, mainly includes direct linear transformation (DLT) method, Tsai RAC calibration method, Zhang Zhengyou plane calibration method, Hu Zhanyi round calibration method etc. The image device self-calibration method uses the corresponding relation between multiple images to calibrate.

After obtaining coordinates of the imaging plane, the normal direction coordinates of the imaging plane can be acquired, while the three-dimensional space points can be projected onto the imaging plane. The coordinate translation is very simple and usually does not affect the encoding. When the two-dimensional and three-dimensional coordinate system have the same starting point, set the normal direction vector coordinates of the imaging plane are $(x_d, y_d, z_d)$, the absolute coordinates of the three-dimensional space points are $(x, y, z)$, the projection coordinates on the imaging plane of three-dimensional space points are $(x_p, y_p, 0)$, then,

$$x_p = x - \frac{x_d}{z_d} z$$

$$y_p = y - \frac{y_d}{z_d} z$$

After obtaining all the projections that the three-dimensional space points projected on the two-dimensional plane, the projected two-dimensional graphic can be used to encode the two-dimensional graphic shape, further, combining the imaging plane coordinates or normal direction information with the two-dimensional graphic shape encoding can get the three-dimensional encoding, and ultimately determine the motion trajectory information of the input target object.

Preferably, the motion signature information as described shall comprise any of the following,

- Prominent signature information,
- Global signature information,
- Trend information.

Here, the prominent signature information of the motion trajectory information including but not limited to the speed (acceleration), direction, time and relative position of the folding point (speed, acceleration or local peak or valley point of the direction change), the global signature information of the motion trajectory information including but not limited to sloshing frequency, amplitude, speed variance, etc., and the signatures generated from this, the relative trend information such as the relative trend of etc.

For example, the generation unit 103 can eliminate the encoding influence caused by different devices detection through the encoding of the speed, direction relative trend, such as use up (+1), even (0), down (-1) etc. to describe the motion trend information, etc. The generation unit 103 can encode by using the following two plans, namely, to generate corresponding motion signature,

1) use the following formula to determine the motion signature,

$$C = A1\text{-}A2$$

Wherein, C is a differential encoding, i.e., trend, A1 is the first time motion signature information, such as speed, direction, etc., A2 is the second time motion signature information,
2) further two-value or three-value C, such as take +1, 0, -1.

For example, for the speeds of the input target object at four times, base on the first motion signature information 1231 and the second motion signature information 2342 of the input target object, the generation unit 103 differential encodes these two motion signature information and obtains the same motion signature, 11-2. As another example, for the accelerations of the input target object at four times, base on the first motion signature information 1231 and the second motion signature information 1353, the generation unit 103 differential encodes these two motion signature information and obtains different motion signatures, but they have the same two-value or three-value difference, 11-1. 3) use the encoding combines speed and direction change, e.g., the three speed (or acceleration) trends are acceleration (+1), uniform (0) and deceleration (-1), so there are three corresponding encodings, the three direction trends are up (+1), even (0) and down (-1), so there are three corresponding encodings, thus will get more encodings after the combination of the two, such as acceleration up (4), acceleration even (3), acceleration down (2), uniform up (1), uniform even (0), uniform down (-1), deceleration up (-2), deceleration even (-3), deceleration down (-4) and so on.

In another preferred embodiment, the generation unit 103 generates the motion signature by combining the motion signature information with the input target object information. Specifically, according to the motion signature information of the input target object information determined by the determination unit 102, such as the signature, the edge and the contour etc. motion trajectory information of the input target object, and combines with the input target object information such as hand information, specific gesture information, light-emitting unit information under predetermined light-emitting mode etc., the generation unit 103 generates the motion signature of the input target object by a certain encoding method.

Here, the object information as described shall comprise any of the following,

- Hand information.
- Specific gesture information,
- Light-emitting unit information under predetermined light-emitting mode. Object information includes the identification information for identifying the input target object, such as hand, face, mobile phone, specific gesture and light-emitting unit information under predetermined light-emitting mode etc. For example, if the object information is hand, the motion signature generated by the generation unit 103 includes hand information. The motion signature generation device 1 can use pattern recognition analysis to detect specific gesture information, hand information or face information, even recognize specific objects, such as mobile phones and other rectangular objects.

Identification process includes the feature extraction and training of a large number of input target objects and non-input target objects, discriminator generation, using discriminator for discriminating the candidate input target objects, determination of input target objects or non-input target objects. Wherein the feature extraction can use Harr-like, HOG, LBP etc. methods, and training can use LDA, SVM, Adaboost etc. methods. Edge extraction and template matching shape recognition method can be used for the detection of certain shape objects. Template matching can use Haussdorff or Chafer distance matching etc. methods. Shape detection and object recognition methods can be combined to use for certain shape objects, such as shape detection first, then use object recognition method to recognize the satisfied candidates.

Here, the user can also use the wearable device, which generate specific gestures like open hand, make a fist, wave, etc., the generation unit 103 can determine the specific gesture of the user by wearable computing, such as the user open palm, make a fist, then wave etc. gestures, then generate the corresponding motion signature base on the gesture.

Preferably, if detects the input target object in a certain range of a face, such as a square area under the face, the target detection nearby will only start when the face is on the opposite directly. This can speed up the detection and effectively remove the noise effect of the non-input target object, such as the reflection of light points. If there are multiple input target objects and the system only accepts one input device, the face detection can also help priority select the input target object, such as the input target objects under the face closer to the center position or larger (usually the closer face) have a higher priority.

In this case, the object-related information also includes the specific gesture information that can be used for assistant determination of the input target object, such as the hand "V" shape gesture, the face frown or laugh etc. If the object information includes the hand "V" shape gesture, the motion signature generated by the generation unit 103 includes the specific gesture information of the hand "V" shape gesture. For example, the detection unit 101 uses gesture recognition technology to recognize users' gestures, such as thumb up, the determination unit 102 uses motion tracking to identify the motion pattern of users' gestures, such as wave hands, draw "Z" word, write Chinese characters in the air etc., the generation unit 103 can encode gestures and motion patterns, such as encodes the written Chinese characters or English with the corresponding encoding of Chinese characters and ASCII code, different codes for different gestures. These different codes connect to become longer codes, such as gesture 2 with the code 02, namely raising index finger and middle finger, the code for drawing "M" is 109, and then the code for drawing "M" with gesture 2 is 020109.

The object-related information also includes the light-emitting unit information under predetermined light-emitting mode, such as the light-emitting unit information in a certain flashing light emitting frequency or the light-emitting unit information of alternate color flashing light emitting, or the combination of both etc., base on to the motion signature information determined by the determination unit 102, combine with the input target object, such as a light-emitting unit, and the object-related information, such as the light-emitting unit information under predetermined light-emitting mode, the generation unit 103 generates the motion signature. Here, if the target object is not input, the generating device 103 according to the motion characteristic information, combined with the movement of the imaging means photographed background information, generates the motion pattern.

In another preferred embodiment, the activation-triggering criterion comprises detecting the predetermined input target object in the captured initial image, and detecting the predetermined motion pattern in the corresponding motion image of the input target object. Specifically, when the detection unit 101 detects the predetermined input target object in the captured initial image, and detects the input target object motion in the predetermined motion pattern by tracking the input target object, and the determination unit 102 determines the motion signature information of the input target object, then, the generation unit 103 generates the corresponding motion signature by encoding the motion signature information.

In this case, only when the motion trajectory information of the input target object fits the predetermined motion pattern, base on the motion trajectory information, that is, the motion signature information, the generation unit 103 generates the corresponding motion signature by certain encoding.

For example, assume the predetermined motion pattern is circle-drawing, the detection unit 101 detects the predetermined input target object in the initial image, such as the hand, and, obtains the motion image information of the input target object through video tracking method, base on the motion image, determines the motion trajectory information of the input target object through image analysis etc. methods, such as determining the motion trajectory contour information of the input target object, then, base on the motion trajectory information, detects whether or not the motion trajectory information comprises the predetermined motion pattern, such as determining whether or not the motion trajectory information fits the predetermined motion pattern when the motion trajectory of the input target object is a circle, when it fits, determines whether or not the activation-triggering criterion for generation of the motion signature on the basis of the motion signature information is satisfied, and, the determination unit 102 determines the motion signature information, then the generation unit 103 generates the corresponding motion signature by encoding the motion signature information.

Preferably, base on the predetermined image signature information, the detection unit 101 detects whether or not the acquired initial image comprises the predetermined input target object, wherein the input target object corresponds to the image signature information.

Here, the image signature information including but not limited to the color, brightness, shape, size, light-emitting mode (including the number, color, shape, flashing mode, etc.), motion pattern, and the corresponding distribution, composition, or alternating appearing mode etc. signature information. When the input target objects are LED etc. objects with image signature information, base on the predetermined image signature information, the detection unit 101 detects whether or not the acquired initial image comprises the predetermined input target object. For example, assume the predetermined image signature information is the red flashing light-emitting mode, the detection unit 101 detects a red always-on input target object, a green flashing light-emitting input target object and a red flashing light-emitting input target object, base on the predetermined image signature information, the detection unit 101 determines the red flashing light-emitting input target object as the predetermined input target object.

In this case, when the device LED flashlight sloshing, the motion signature generation device 1 distinguishes noise and target light by detecting the predetermined image signature, and detects the motion trajectory of the target light, during which continuous extracting the light signature, determines the real-time detected change mode of the light and generating the corresponding motion signature information for the later recognition and matching use. Including to use specific signatures, such as the color, brightness, shape, size, light-emitting mode, motion mode, and corresponding distribution or combined input target object detection and recognition; use the display device shall display specific light-emitting mode or image as the input target object, such as the color, mode, shape, flashing etc. For example, after a user starts the application, the mobile device screen displays a particular image or video with a specific color brightness distribution, mode (such as shape), flashing etc. image signature information, the user of can sloshing the mobile device screen towards the image device. Preferably, the initial image comprises multiple input target objects, when the activation-triggering criterion is satisfied, the determination unit 102 obtains the motion image information of every input target object respectively, and thus determines the corresponding motion signature information, the generation unit 103 encodes all the motion signature information corresponding to every input target object and generates the motion signature of multiple input target objects.

Specifically, when the detection unit 101 detects the predetermined multiple input target objects in the initial image, the determination unit 102 tracks the motion of the multiple input target objects simultaneously by video tracking, such as a serial or parallel tracking the multiple input target objects, and accordingly generates the corresponding motion signature information, the generation unit 103 encodes all the motion signature information corresponding to every input target object and generates the motion signature of multiple input target objects.

Preferably, when the motion of a certain input target object generates enough motion signature information, the determination unit 102 can track other input target objects and determines the motion signature information, the generation unit 103 generates the motion signature accordingly, that is, the motion signature generation can be independent. Thus one image device can have multiple processing simultaneously.

Preferably, the activation-triggering criterion comprises that the predetermined motion pattern is detected in the acquired motion image, wherein the detection unit 101 detects whether or not the predetermined motion pattern is included in the acquired motion image, then, when the activation-triggering criterion is satisfied, the determination unit 102 determines the corresponding motion signature information base on the corresponding motion detection of the predetermined motion pattern, the generation unit 103 generates the corresponding motion signature by encoding the motion signature information.

For example, for the motion image acquired by the image device, the detection unit 101 detects whether or not the predetermined motion pattern corresponding to the motion signature is included in the acquired motion image, such as segmenting the different motion regions of the motion image through optical flow analysis, or detecting the motion image to get the general direction and size as the motion mode of the image, for example, using the pixels motion of motion-range of the image, get the size and direction of the most votes for the general direction and size, when the multi-frame motion appears qualified motion pattern, that is, when the predetermined motion pattern is detected, determines the activation-triggering criterion for generation of the motion signature on the basis of the motion signature information is satisfied. Then, when the activation-triggering criterion is satisfied, the determination unit 102 determines the corresponding motion signature information base on the corresponding motion detection of the predetermined motion pattern, the generation unit 103 generates the corresponding motion signature by encoding the motion signature information. Assuming the predetermined motion pattern is horizontal sloshing, base on the motion image acquired by the image device, the detection unit 101 detects the image motion (or a sufficiently large area) within one second is the continuously horizontal left and right motion for 3-5 times back and forth enough times within one second, then the activation-triggering criterion is satisfied, the determination unit 102 determines the corresponding motion signature information, the generation unit 103 generates the corresponding motion signature accordingly.

Preferably, base on the motion signature information and its additional information, the generation unit 103 generates the corresponding motion signature accordingly, provide the motion signature to the corresponding processing application. Wherein the additional information shall comprise any of the following,

- The identification information of the motion signature information,
- The auxiliary information of the motion signature information.

Here, the identification information of the motion signature information is used to retrieve and (unique) identify the generated motion signature information, which comprises at least one of the following two parts, 1) the device unique code, identifying the device or unit that generates motion signature information , such as the device MAC address, IP address, phone number, CPU ID, unit ID, device ID, product serial number, universally unique identifier (UUID), international mobile equipment identity (IMEI), international mobile subscriber identity (IMSI) or the extended or encoding code. Different parts of a device may have different unique codes, such as the front-facing image device, the rear-facing image device and the MEMS may have different unique codes. At this time, the codes of the corresponding parts and the device code can be superimposed (such as the device code + unit code or number) and obtains the device unique code, 2) the signature serial number, the producing time, address, serial number, or random number, and the hybrid encoding superimposed by one or more of the above. The two parts can be superimposed or mixed with a certain algorithm to generate motion identification information.

The auxiliary information of the motion signature information includes the rest of information excluded in the identification information of the motion signature information, such as device type information, device connection information (IP address, phone number, etc.), user information, signature generation time, place, pattern, signature encoding, and the required information of the specific application. The auxiliary information of the motion signature information can be wholly or alternately transmitted as a whole or several parts with the motion signature information.

However, it is understood by those skilled in the art that the above additional information of the motion signature information only by way of example, other existing or potential additional information of the motion signature information that applicable to this invention should belong to the scope of protection of the invention by reference.

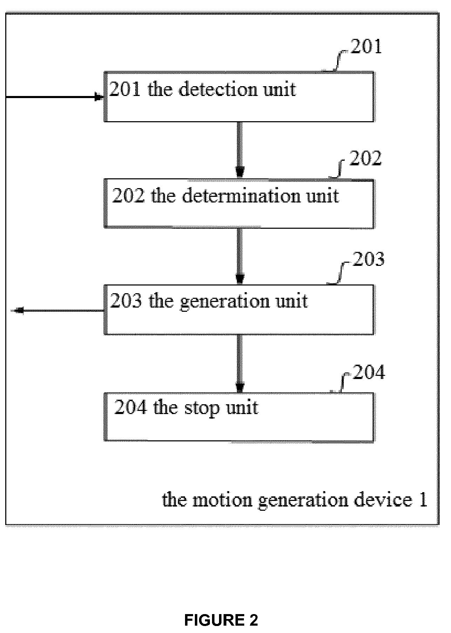

FIG. 2 illustrates a device diagram of generating motion signature on the basis of motion signature information according to a preferred embodiment of the present invention. The motion signature generation device 1 also comprises stop unit 204. Refer FIG 2 for the details of the preferred embodiment, specifically, the detection unit 201 detects whether or not the activation-triggering criterion for generation of the motion signature on the basis of the motion signature information is satisfied, when the activation-triggering criterion is satisfied, the determination unit 202, determination, on the basis of the detection of the motion that corresponds to the activation-triggering criterion, of the motion signature information corresponding to the motion, the generation unit 203, encoding of the motion signature information, and, generation of the motion signature corresponding to the motion signature information, the stop unit 204 detects whether or not the stop activation-triggering criterion for stop generation of the motion signature on the basis of the motion signature information is satisfied, if it is satisfied, the notice information of the stop generation motion signature shall be provided. Wherein the detection unit 201, the determination unit 202 and the generation unit 203 are the same or basically the same with the according ones shown in FIG. 1, so won't be covered again while incorporated herein by reference.

Wherein the stop unit 204 detects whether or not the stop activation-triggering criterion for stop generation of the motion signature on the basis of the motion signature information is satisfied, if it is satisfied, the notice information of the stop generation motion signature shall be provided, wherein, the stop activation-triggering criterion shall comprise any of the following,

- Get the predetermined stop activation-triggering information for stop generation of the motion signature,
- Detected the predetermined motion mode corresponding to the stop generation motion signature in the motion image,
- The generated motion signature satisfies the predetermined stop criterion.

For example, a user can send a stop signal by clicking or long-press the specific button on the mobile terminal etc. device as interaction, the stop unit 204 interacts with the mobile terminal etc. device, such as WIFI, Bluetooth, Infrared, Internet or other agreed communication modes to get the stop information, and determines the stop activation-triggering criterion for stop generation of the motion signature is satisfied. Subsequently, the stop unit 204 stops generating the motion signature, such as informs the follow-up device to stop working through a predetermined communication mode, then, the stop unit 204 also provides the prompt message motion to stop generating motion signature, such as send a message to a user or a mobile phone by vibrating, ringing, voice prompt, screen display etc.

As another example, the stop activation-triggering criterion includes when the predetermined motion pattern corresponding to the stop generating motion signature is detected in the motion image, such as pre-set when the predetermined motion pattern is to draw "V" shape corresponding to the stop generating motion signature, then when the motion signature generation device 1 detects the predetermined motion pattern drawing "V" shape in the motion image, the stop unit 204 determines the stop activation-triggering criterion of stop generating motion signature is satisfied.

Further, the stop activation-triggering criterion includes when the generated motion signature satisfies the predetermined stop criterion, such as the motion trajectory length obtained by the motion signature generation device 1 exceeds the predetermined length threshold, or the generated motion signature amount exceeds the predetermined amount threshold, the stop unit 204 determines the stop activation-triggering criterion of stop generating motion signature is satisfied..

However, it is understood by those skilled in the art that the above the stop activation-triggering criterion only by way of example, other existing or potential the stop activation-triggering criterion that applicable to this invention should belong to the scope of protection of the invention by reference.

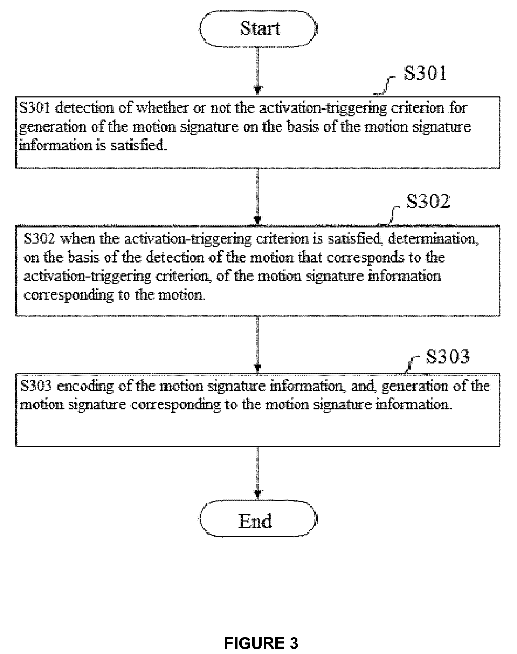

Figure 3 shows a flowchart of a method to generate the motion information based on the movement pattern A further aspect of the present invention.

In step S301, the motion signature generation device 1 detects whether or not the activation-triggering criterion for generation of the motion signature on the basis of the motion signature information is satisfied, wherein, the activation-triggering criterion as described shall comprise any of the following,

- Get the predetermined activation-triggering information for generation of the motion signature information,
- Detected the predetermined input target object from the captured initial image,
- Detected the predetermined motion pattern from the captured motion image.

For example, a user can send a start signal by clicking or long-press the specific button on the mobile terminal or wearable device as interaction, in step S301, the motion signature generation device 1 interacts with the mobile terminal or interactive wearable device, such as WIFI, Bluetooth, Infrared, Internet or other agreed communication modes to get the start information, and determines the activation-triggering criterion for generation of the motion signature on the basis of the motion signature information is satisfied.

As another example, base on the initial image captured by the image device, in step S301, the motion signature generation device 1 detects whether or not the predetermined input target object is included in the acquired initial image by image recognition, etc., such as detecting whether or not the satisfied region is included in the initial image, like skin area, face, and other shaped objects, when the above input target object is detected, determines the activation-triggering criterion for generation of the motion signature on the basis of the motion signature information is satisfied.

Further, base on the motion image captured by the image device, in step S301, the motion signature generation device 1 detects whether or not the predetermined motion pattern is included in the captured motion image by image recognition, etc., such as segmenting the different motion regions of the motion image through optical flow analysis, or detecting the motion image to get the general direction and size as the motion mode of the image, for example, using the pixels motion of motion-range of the image, get the size and direction of the most votes for the general direction and size, when the multi-frame motion appears qualified motion pattern, that is, when the predetermined motion pattern is detected, determines the activation-triggering criterion for generation of the motion signature on the basis of the motion signature information is satisfied.

However, it is understood by those skilled in the art that the above activation-triggering criterion only by way of example, other existing or potential activation-triggering criterion that applicable to this invention should belong to the scope of protection of the invention by reference.

In step S302, when the motion signature generation device 1 meets the activation-triggering criterion, determination, on the basis of the detection of the motion that corresponds to the activation-triggering criterion, of the motion signature information or motion signature corresponding to the motion. Specifically, in step S302, the motion signature generation device 1 detects the activation-triggering criterion for generation of the motion signature on the basis of the motion signature information is satisfied, in step S302, the motion signature generation device determines the motion signature information, such as motion velocities, accelerations and motion directions relative changes through detecting the motion that corresponds to the activation-triggering criterion by MEMS sensors, two-dimensional image device and three-dimensional image device etc.

Preferably, the motion signature generation device 1 comprises a sensor detecting device, wherein, the sensor detecting device as described shall comprise any of the following,

- MEMS sensor,
- Two-dimensional image device,
- Three-dimensional image device.

However, it is understood by those skilled in the art that the above sensor detecting device only by way of example, other existing or potential sensor detecting device that applicable to this invention should belong to the scope of protection of the invention by reference.

In step S302, the motion signature generation device 1 encodes the motion signature information, and, generates the motion signature corresponding to the motion signature information. Specifically, in step S302, the motion signature generation device 1 generates the motion signature corresponding to the motion signature information according to the motion signature information determined in step S302 through a certain encoding methods, such as Fourier shape descriptor method, geometric parameter method, shape invariant moment method, rotation function method, wavelet descriptor method, etc., for example, generates the motion signature corresponding to the signature, the edge and the contour etc. information of the motion trajectory shape, or, generation of the motion signature on the basis of the motion trajectory velocities, accelerations and motion directions relative changes etc. information of the motion image.

For example, in step S303, the motion signature generation device 1 describes and encodes the motion image on the basis of its motion shape feature, i.e., to generate corresponding motion signature information, such as encode the two-dimensional or three-dimensional motion trial directly though the shape and contour encoding methods, or, confined encode the time-series sequence and the shape feature, like the principle of smart phones grid screen lock, that is, the different sequence of the generated trajectory affects encoding output. Encoding methods include Fourier shape descriptor method, geometric parameter method, shape invariant moment method, rotation function method, wavelet descriptor method, etc.

As another example, in step S303, the motion signature generation device 1 uses gesture recognition technology to recognize users' gestures, such as thumb up, palm, fist etc. gestures, the motion signature generation device 1 uses motion tracking to identify the motion pattern of users' gestures, such as wave hands, draw "Z" word, write Chinese characters in the air etc., or, the user uses wearable device, the motion signature generation device 1 can determine the user's gesture through wearable computing, such as the user open palm, make a fist, then wave etc. gestures. In step S303, the motion signature generation device 1 can encode gestures and motion patterns, such as encodes the written Chinese characters or English with the corresponding encoding of Chinese characters and ASCII code, different codes for different gestures. These different codes connect to become longer codes, such as gesture 2 with the code 02, namely raising index finger and middle finger, the code for drawing "M" is 109, and then the code for drawing "M" with gesture 2 is 020109.

However, it is understood by those skilled in the art that the above generation mode of the motion signature information only by way of example, other existing or potential generation mode of the motion signature information that applicable to this invention should belong to the scope of protection of the invention by reference

Wherein, the encoding process as described shall comprise any of the following,

- Encoding form conversion process,

- Encoding packing process,
- Encoding compression process,
- Encoding encryption process.

However, it is understood by those skilled in the art that the above encoding process mode only by way of example, other existing or potential encoding process mode that applicable to this invention should belong to the scope of protection of the invention by reference. Preferably, the activation-triggering criterion comprises detecting the predetermined input target object from the captured initial image, wherein step S302 comprises a sub-step S302a (not shown) and a sub-step S302b (not shown). In sub-step S302a, when the motion signature generation device 1 meets the activation-triggering criterion and obtains the motion image information of the input target object, in sub-step S302b, the motion signature generation device 1 determines the motion image information of the input target object on the basis of the motion image information. Specifically, base on the initial image captured by the image device, in step S301, the motion signature generation device 1 detects whether or not the predetermined input target object is included in the acquired initial image by image recognition, etc., such as detecting whether or not the satisfied region is included in the initial image, like skin area, face, and other shaped objects, when the above input target object is detected, determines the activation-triggering criterion for generation of the motion signature on the basis of the motion signature information is satisfied.

Subsequently, when the activation-triggering criterion is satisfied, through video tracking etc. method, in sub-step S302a, the motion signature generation device 1 tracks the input target object detected in step S301 to obtain the motion image information as the motion image that corresponds to the activation-triggering criterion.

Next, on the basis of the obtained motion image in sub-step S302a, the motion trajectory information, motion trend information, or combined with the input target object information, in sub-step S302b, the motion signature generation device 1 determines the motion signature information of the input target object, for example, generates the motion signature information of the input target object corresponding to the signature, the edge and the contour etc. information of the motion trajectory shape.

For example, the motion signature generation device 1 can use two-dimensional or three-dimensional image device to capture motion pattern and generate motion signature information. The motion signature information generated by two-dimensional image device is equivalent to the two-dimensional code of the motion plane mapping trace. In this case, the two-dimensional or three-dimensional image device obtains an initial image, in step S301, the motion signature generation device 1 detects the predetermined input target object in the initial image, and in sub-step S302a, the motion signature generation device 1 tracks the input target object through video tracking etc. method, in sub-step S302b, the motion signature generation device 1 determines the motion signature information of the input target object on the basis of the motion trajectory information.

Here, in step S301, the motion signature generation device 1 detects the satisfied region as the input target object by image recognition, like skin area, face, and other shaped objects. Preferably, through video tracking method, in sub-step S302a, the motion signature generation device 1 can track one or more of the target motion simultaneously, wherein generating the motion signature information based on motion signature.

Preferably, the motion signature information shall further comprise the motion trajectory information of the input target object, wherein in step S303, the motion signature generation device 1 encodes the motion trajectory information and generates the motion signature corresponding to the motion trajectory information. Specifically, in step S302, the motion signature generation device 1 determines the motion trajectory information of the input target object based on the acquired motion image, for example, determines the motion trajectory information of the input target object like the signature, the edge and the contour etc. information of the motion trajectory shape through image recognition and analysis, in step S303, the motion signature generation device 1 generates the motion signature of the input target object according to the motion trajectory information through a certain encoding methods, such as Fourier shape descriptor method, geometric parameter method, shape invariant moment method, rotation function method, wavelet descriptor method, etc. Preferably, only when in step S301, the motion signature generation device 1 detects the specific motion of the input target object in the initial image, in step S303, the motion signature generation device 1 will generate the corresponding motion signature or output the generated motion signature, such as the input target object will generate a valid motion signature after at least one time sloshing back and forth, or it will be not considered.

Preferably, the method also includes step S305 (not shown). In step S305, the motion signature generation device 1 reduces the dimension of the motion signature information to obtain the motion signature information after dimension reduction, in step S303, the motion signature generation device 1 encodes the dimension reduced motion signature information and generates the motion signature of the input target object. Specifically, in step S305, the motion signature generation device 1 reduces the dimension of the motion signature information according to the motion signature information determined in step S302 through mapping etc. method, for example, reduces the dimension of the three-dimensional motion signature information into the two-dimensional motion signature information, then, in step S303, the motion signature generation device 1 encodes the dimension reduced motion signature information through encoding packing process, encoding compression process, encoding encryption process etc., and generates the motion signature of the input target object.

Preferably, in step S305, the motion signature generation device 1 reduces the motion signature information from the three-dimensional space into the two-dimensional plane, wherein the two-dimensional plane as described shall comprise any of the following,

- Image acquisition plane,
- Two-dimensional fitting plane,
- Vertical fitting plane,
- Direction towards the equipment fitting plane.

In this case, since the motion is produced in three-dimensional space, some remote sensing devices (such as the common image device) can only capture the motion signature of two-dimensional space, while other remote sensing devices (such as three-dimensional image device or MEMS) can capture the three-dimensional motion trajectory. Therefore, the dimension reduction of the motion image can resolve the differences caused by different capture devices, such as project a motion of the three-dimensional space onto a specific two-dimensional space. Dimension reduction or projection mode including but not limited to,

1) base on the known image plane (for example, before use, set the image plane relative to the geodetic coordinate direction in the system by the image device direction provided by Compass etc. sensors or other similar calibration process, the image device direction can be easily given if the image device has Compass, etc. orientation sensor),

2) calculate the two-dimensional fitting plane closest to the three-dimensional motion direction by principal axes analysis the three-dimensional motion trajectory, and to take the plane composed of the maximum two axes, that is, the two-dimensional fitting plane that minimum error estimation of three-dimensional motion distribution.

3) similar to 2), but the minimum error plane here is vertical, one calculation method is to project the three-dimensional trajectory onto the two-dimensional horizontal direction, then principal axes analysis its two-dimensional horizontal plane distribution to take the maximum axis direction, the decided vertical plane is vertical plane with the minimum fitting error,

4) take the vertical direction of the device average orientation as the projection direction.

The image device direction can be easily given if the image device has Compass, etc. orientation sensor. The positional relation of the three-dimensional and two-dimensional image plane is also determined. Likewise, the relative direction of any two image devices can be easily obtained. If there is no direction sensor, the traditional image calibration method can also detect the relative direction between different image devices planes (relative calibration) or the absolute position relation of the any image device relative to the earth (absolute calibration). The specific method of relative calibration comprises finding the corresponding set of points in the image provided by two image devices manually or automatically, for example, at least eight points or three round holes. The specific method of absolute calibration is to calculate the external parameters of the image device through the given geodetic coordinates of a set of points or image device calibration method, then determine the relative position between the image devices or the absolute position of the image device in the world coordinate system. Current image device calibration methods can be divided into the traditional image device calibration method and the image device self-calibration method. The traditional method generally requires calibration block (three-dimensional or two-dimensional) as the spatial reference, mainly includes direct linear transformation (DLT) method, Tsai RAC calibration method, Zhang Zhengyou plane calibration method, Hu Zhanyi round calibration method etc. The image device self-calibration method uses the corresponding relation between multiple images to calibrate.

After obtaining coordinates of the imaging plane, the normal direction coordinates of the imaging plane can be acquired, while the three-dimensional space points can be projected onto the imaging plane. The coordinate translation is very simple and usually does not affect the encoding. When the two-dimensional and three-dimensional coordinate system have the same starting point, set the normal direction vector coordinates of the imaging plane are (xd, yd, zd), the absolute coordinates of the three-dimensional space points are (x, y, z), the projection coordinates on the imagine plane of three-dimensional space points are (xp, yp, 0), then,

$$x_p = x - \frac{x_d}{z_d} z$$

$$y_p = y - \frac{y_d}{z_d} z$$

After obtaining all the projections that the three-dimensional space points projected on the two-dimensional plane, the projected two-dimensional graphic can be used to encode the two-dimensional graphic shape, further, combining the imaging plane coordinates or normal direction information with the two-dimensional graphic shape encoding can get the three-dimensional encoding, and ultimately determine the motion trajectory information of the input target object.

Preferably, the motion signature information as described shall comprise any of the following,

- Prominent signature information,

- Global signature information,
- Trend information.

Here, the prominent signature information of the motion trajectory information including but not limited to the speed (acceleration), direction, time and relative position of the folding point (speed, acceleration or local peak or valley point of the direction change), the global signature information of the motion trajectory information including but not limited to sloshing frequency, amplitude, speed variance, etc., and the signatures generated from this, the relative trend information such as the relative trend of etc.

For example, in step S303, the motion signature generation device 1 can eliminate the encoding influence caused by different devices detection through the encoding of the speed, direction relative trend, such as use up (+1), even (0), down (-1) etc. to describe the motion trend information, etc. In step S303, the motion signature generation device 1 can encode by using the following two plans, namely, to generate corresponding motion signature,

1) use the following formula to determine the motion signature,

$$C = A1 - A2$$

Wherein, C is a differential encoding, i.e., trend, A1 is the first time motion signature information, such as speed, direction, etc., A2 is the second time motion signature information,

2) further two-value or three-value C, such as take +1, 0, -1.

For example, for the speeds of the input target object at four times, base on the first motion signature information 1231 and the second motion signature information 2342 of the input target object, in step S303, the motion signature generation device 1 differential encodes these two motion signature information and obtains the same motion signature, 11-2. As another example, for the speeds of the input target object at four times, base on the first motion signature information 1231 and the second motion signature information 1353, in step S303, the motion signature generation device 1 differential encodes these two motion signature information and obtains different motion signatures, but they have the same two-value or three-value difference, 11-1.

3) use the encoding combines speed and direction change, e.g., the three speed (or acceleration) trends are acceleration (+1), uniform (0) and deceleration (-1), so there are three corresponding encodings, the three direction trends are up (+1), even (0) and down (-1), so there are three corresponding encodings, thus will get more encodings after the combination of the two, such as acceleration up (4), acceleration even (3), acceleration down (2), uniform up (1), uniform even (0), uniform down (-1), deceleration up (-2), deceleration even (-3), deceleration down (-4) and so on.

In another preferred embodiment, in step S303, the motion signature generation device 1 generates the motion signature by combining the motion signature information with the input target object information. Specifically, according to the motion signature information of the input target object information determined in step S302, such as the signature, the edge and the contour etc. motion trajectory information of the input target object, and combines with the input target object information such as hand information, specific gesture information, light-emitting unit information under predetermined light-emitting mode etc., in step S303, the motion signature generation device, 1 generates the motion signature of the input target obj ect by a certain encoding method.

Here, the object information as described shall comprise any of the following,

- Hand information.
- Specific gesture information,
- Light-emitting unit information under predetermined light-emitting mode.

Object information includes the identification information for identifying the input target object, such as hand, face, mobile phone, specific gesture and light-emitting unit information under predetermined light-emitting mode etc. For example, if the object information is hand, in step S303, the motion signature generated by the motion signature generation device 1 includes hand information. The motion signature generation device 1 can use pattern recognition analysis to detect specific gesture information, hand information or face information, even recognize specific objects, such as mobile phones and other rectangular objects. Identification process includes the feature extraction and training of a large number of input target objects and non-input target objects, discriminator generation, using discriminator for discriminating the candidate input target objects, determination of input target objects or non-input target objects. Wherein the feature extraction can use Harr-like, HOG, LBP etc. methods, and training can use LDA, SVM, Adaboost etc. methods. Edge extraction and template matching shape recognition method can be used for the detection of certain shape objects. Template matching can use Haussdorff or Chafer distance matching etc. methods. Shape detection and object recognition methods can be combined to use for certain shape objects, such as shape detection first, then use object recognition method to recognize the satisfied candidates.

Here, the user can also use the wearable device, which generate specific gestures like open hand, make a fist, wave, etc., in step S303, the motion signature generation device 1 can determine the specific gesture of the user by wearable computing, such as the user open palm, make a fist, then wave etc. gestures, then generate the corresponding motion signature base on the gesture.

Preferably, if detects the input target object in a certain range of a face, such as a square area under the face, the target detection nearby will only start when the face is on the opposite directly. This can speed up the detection and effectively remove the noise effect of the non-input target object, such as the reflection of light points. If there are multiple input target objects and the system only accepts one input device, the face detection can also help priority select the input target object, such as the input target objects under the face closer to the center position or larger (usually the closer face) have a higher priority.

In this case, the object-related information also includes the specific gesture information that can be used for assistant determination of the input target object, such as the hand "V" shape gesture, the face frown or laugh etc. If the object information includes the hand "V" shape gesture, in step S303, the motion signature generated by the motion signature generation device 1 includes the specific gesture information of the hand "V" shape gesture. For example, in step S301, the motion signature generation device uses gesture recognition technology to recognize users' gestures, such as thumb up, in step S302, the motion signature generation device uses motion tracking to identify the motion pattern of users' gestures, such as wave hands, draw "Z" word, write Chinese characters in the air etc., in step S303, the motion signature generation device 1 can encode gestures and motion patterns, such as encodes the written Chinese characters or English with the corresponding encoding of Chinese characters and ASCII code, different codes for different gestures. These different codes connect to become longer codes, such as gesture 2 with the code 02, namely raising index finger and middle finger, the code for drawing "M" is 109, and then the code for drawing "M" with gesture 2 is 020109.

The object-related information also includes the light-emitting unit information under predetermined light-emitting mode, such as the light-emitting unit information in a certain flashing light emitting frequency or the light-emitting unit information of alternate color flashing light emitting, or the combination of both etc., base on to the motion signature information determined in step S302, combine with the input target object, such as a light-emitting unit, and the object-related information, such as the light-emitting unit information under predetermined light-emitting mode, in step S303, the motion signature generation device 1 generates the motion signature.

Here, if the target object is not input, in step S303, the motion signature generation device 1 according to the motion characteristic information, combined with the movement of the imaging means photographed background information, generates the motion pattern.

In another preferred embodiment, the activation-triggering criterion comprises detecting the predetermined input target object in the captured initial image, and detecting the predetermined motion pattern in the corresponding motion image of the input target object. Specifically, in step S301, when the motion signature generation device 1 detects the predetermined input target object in the captured initial image, and detects the input target object motion in the predetermined motion pattern by tracking the input target object, in step S302, the motion signature generation device 1 determines the motion signature information of the input target object, then, in step S303, the motion signature generation device 1 generates the corresponding motion signature by encoding the motion signature information.

In this case, only when the motion trajectory information of the input target object fits the predetermined motion pattern, base on the motion trajectory information, that is, the motion signature information, in step S303, the motion signature generation device 1 generates the corresponding motion signature by certain encoding.

For example, assume the predetermined motion pattern is circle-drawing, in step S301, when the motion signature generation device 1 detects the predetermined input target object in the initial image, such as the hand, and, obtains the motion image information of the input target object through video tracking method, base on the motion image, determines the motion trajectory information of the input target object through image analysis etc. methods, such as determining the motion trajectory contour information of the input target object, then, base on the motion trajectory information, detects whether or not the motion trajectory information comprises the predetermined motion pattern, such as determining whether or not the motion trajectory information fits the predetermined motion pattern when the motion trajectory of the input target object is a circle, when it fits, determines whether or not the activation-triggering criterion for generation of the motion signature on the basis of the motion signature information is satisfied, and, in step S302, when the motion signature generation device 1 determines the motion signature information, then in step S303, when the motion signature generation device 1 generates the corresponding motion signature by encoding the motion signature information.

Preferably, base on the predetermined image signature information, in step S301, the motion signature generation device 1 detects whether or not the acquired initial image comprises the predetermined input target object, wherein the input target object corresponds to the image signature information.

Here, the image signature information including but not limited to the color, brightness, shape, size, light-emitting mode (including the number, color, shape, flashing mode, etc.), motion pattern, and the corresponding distribution, composition, or alternating appearing mode etc. signature information. When the input target objects are LED etc. objects with image signature information, base on the predetermined image signature information, in step S301, the motion signature generation device 1 detects whether or not the acquired initial image comprises the predetermined input target object. For example, assume the predetermined image signature information is the red flashing light-emitting mode, in step S301, the motion signature generation device 1 detects a red always-on input target object, a green flashing light-emitting input target object and a red flashing light-emitting input target object, base on the predetermined image signature information, in step S301, the motion signature generation device 1 determines the red flashing light-emitting input target object as the predetermined input target object.

In this case, when the device LED flashlight sloshing, the motion signature generation device 1 distinguishes noise and target light by detecting the predetermined image signature, and detects the motion trajectory of the target light, during which continuous extracting the light signature, determines the real-time detected change mode of the light and generating the corresponding motion signature information for the later recognition and matching use. Including to use specific signatures, such as the color, brightness, shape, size, light-emitting mode, motion mode, and corresponding distribution or combined input target object detection and recognition; use the display device shall display specific light-emitting mode or image as the input target object, such as the color, mode, shape, flashing etc. For example, after a user starts the application, the mobile device screen displays a particular image or video with a specific color brightness distribution, mode (such as shape), flashing etc. image signature information, the user of can sloshing the mobile device screen towards the image device. Preferably, the initial image comprises multiple input target objects, when the activation-triggering criterion is satisfied, in step S302, the motion signature generation device 1 obtains the motion image information of every input target object respectively, and thus determines the corresponding motion signature information, in step S303, the motion signature generation device 1 encodes all the motion signature information corresponding to every input target object and generates the motion signature of multiple input target objects.

Specifically, in step S301, the motion signature generation device 1 detects the predetermined multiple input target objects in the initial image, in step S302, the motion signature generation device 1 tracks the motion of the multiple input target objects simultaneously by video tracking, such as a serial or parallel tracking the multiple input target objects, and accordingly generates the corresponding motion signature information, in step S303, the motion signature generation device 1 encodes all the motion signature information corresponding to every input target object and generates the motion signature of multiple input target objects.

Preferably, when the motion of a certain input target object generates enough motion signature information, in step S302, the motion signature generation device 1 can track other input target objects and determines the motion signature information, in step S303, the motion signature generation device 13 generates the motion signature accordingly, that is, the motion signature generation can be independent. Thus one image device can have multiple processing simultaneously.

Preferably, the activation-triggering criterion comprises that the predetermined motion pattern is detected in the acquired motion image, wherein in step S301, the motion signature generation device 1 detects whether or not the predetermined motion pattern is included in the acquired motion image, then, when the activation-triggering criterion is satisfied, in step S302, the motion signature generation device 1 determines the corresponding motion signature information base on the corresponding motion detection of the predetermined motion pattern, in step S303, the motion signature generation device 1 generates the corresponding motion signature by encoding the motion signature information.

For example, for the motion image acquired by the image device, in step S301, the motion signature generation device 1 detects whether or not the predetermined motion pattern corresponding to the motion signature is included in the acquired motion image, such as segmenting the different motion regions of the motion image through optical flow analysis, or detecting the motion image to get the general direction and size as the motion mode of the image, for example, using the pixels motion of the whole motion image, get the size and direction of the most votes for the general direction and size, when the multi-frame motion appears qualified motion pattern, that is, when the predetermined motion pattern is detected, determines the activation-triggering criterion for generation of the motion signature on the basis of the motion signature information is satisfied. Then, when the activation-triggering criterion is satisfied, in step S302, the motion signature generation device 1 determines the corresponding motion signature information base on the corresponding motion detection of the predetermined motion pattern, in step S303, the motion signature generation device 1 generates the corresponding motion signature by encoding the motion signature information. Assuming the predetermined motion pattern is horizontal sloshing, base on the motion image acquired by the image device, in step S301, the motion signature generation device 1 detects the image motion (or a sufficiently large area) within one second is the continuously horizontal left and right motion for 3-5 times back and forth enough times within one second, then the activation-triggering criterion is satisfied, in step S302, the motion signature generation device 1 determines the corresponding motion signature information, in step S303, the motion signature generation device 1 generates the corresponding motion signature accordingly. Preferably, base on the motion signature information and its additional information, in step S303, the motion signature generation device 1 generates the corresponding motion signature accordingly, provide the motion signature to the corresponding processing application. Wherein the additional information shall comprise any of the following,

- The identification information of the motion signature information,
- The auxiliary information of the motion signature information.

Here, the identification information of the motion signature information is used to retrieve and (unique) identify the generated motion signature information, which comprises at least one of the following two parts, 1) the device unique code, identifying the device or unit that generates motion signature information , such as the device MAC address, IP address, phone number, CPU ID, unit ID, device ID, product serial number, universally unique identifier (UUID), international mobile equipment identity (IMEI), international mobile subscriber identity (IMSI) or the extended or encoding code. Different parts of a device may have different unique codes, such as the front-facing image device, the rear-facing image device and the MEMS may have different unique codes. At this time, the codes of the corresponding parts and the device code can be superimposed (such as the device code + unit code or number) and obtains the device unique code, 2) the signature serial number, the producing time, address, serial number, or random number, and the hybrid encoding superimposed by one or more of the above. The two parts can be superimposed or mixed with a certain algorithm to generate motion identification information.

The auxiliary information of the motion signature information includes the rest of information excluded in the identification information of the motion signature information, such as device type information, device connection information (IP address, phone number, etc.), user information, signature generation time, place, pattern, signature encoding, and the required information of the specific application. The auxiliary information of the motion signature information can be wholly or alternately transmitted as a whole or several parts with the motion signature information.

However, it is understood by those skilled in the art that the above additional information of the motion signature information only by way of example, other existing or potential additional information of the motion signature information that applicable to this invention should belong to the scope of protection of the invention by reference.

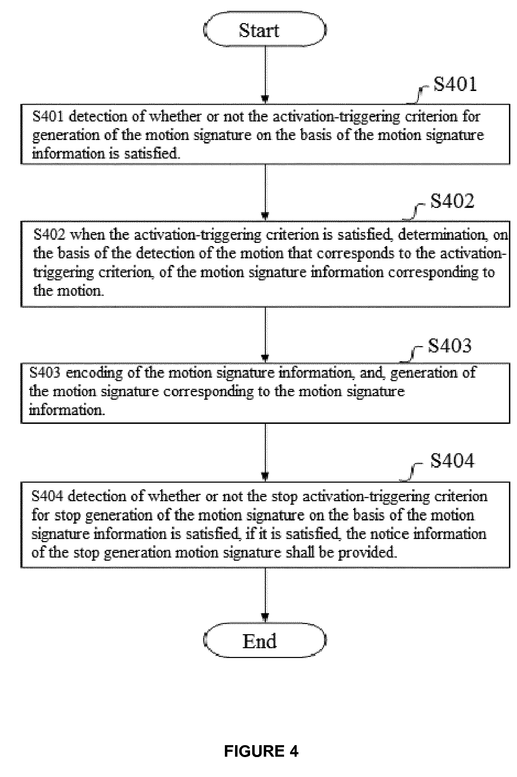

FIG. 4 illustrates a device diagram of generating motion signature on the basis of motion signature information according to a preferred embodiment of the present invention. The motion signature generation device 1 also comprises step S404. Refer FIG 4 for the details of the preferred embodiment, specifically, in step S404, the motion signature generation device 1 detects whether or not the activation-triggering criterion for generation of the motion signature on the basis of the motion signature information is satisfied, when the activation-triggering criterion is satisfied, in step S402, the motion signature generation device 1, determination, on the basis of the detection of the motion that corresponds to the activation-triggering criterion, of the motion signature information corresponding to the motion, in step S403, the motion signature generation device 1 encodes the motion signature information and generates the motion signature corresponding to the motion signature information, in step S404, the motion signature generation device 1 detects whether or not the stop activation-triggering criterion for stop generation of the motion signature on the basis of the motion signature information is satisfied, if it is satisfied, the notice information of the stop generation motion signature shall be provided. Wherein step S401-S403 are the same or basically the same with the according ones shown in FIG. 3, so won't be covered again while incorporated herein by reference.

Wherein in step S404, the motion signature generation device 1 detects whether or not the stop activation-triggering criterion for stop generation of the motion signature on the basis of the motion signature information is satisfied, if it is satisfied, the notice information of the stop generation motion signature shall be provided, wherein, the stop activation-triggering criterion shall comprise any of the following,

- Get the predetermined stop activation-triggering information for stop generation of the motion signature,
- Detected the predetermined motion mode corresponding to the stop generation motion signature in the motion image,
- The generated motion signature satisfies the predetermined stop criterion

For example, a user can send a stop signal by clicking or long-press the specific button on the mobile terminal etc. device as interaction, in step S404, the motion signature generation device 1 interacts with the mobile terminal etc. device, such as WIFI, Bluetooth, Infrared, Internet or other agreed communication modes to get the stop information, and determines the stop activation-triggering criterion for stop generation of the motion signature is satisfied. Subsequently, in step S404, the motion signature generation device 1 stops generating the motion signature, such as informs the follow-up device to stop working through a predetermined communication mode, then, in step S404, the motion signature generation device 1 also provides the prompt message motion to stop generating motion signature, such as send a message to a user or a mobile phone by vibrating, ringing, voice prompt, screen display etc.

As another example, the stop activation-triggering criterion includes when the predetermined motion pattern corresponding to the stop generating motion signature is detected in the motion image, such as pre-set when the predetermined motion pattern is to draw "V" shape corresponding to the stop generating motion signature, then when the motion signature generation device 1 detects the predetermined motion pattern drawing "V" shape in the motion image, in step S404, the motion signature generation device 1 determines the stop activation-triggering criterion of stop generating motion signature is satisfied.

Further, the stop activation-triggering criterion includes when the generated motion signature satisfies the predetermined stop criterion, such as the motion trajectory length obtained by the motion signature generation device 1 exceeds the predetermined length threshold, or the generated motion signature amount exceeds the predetermined amount threshold, in step S404, the motion signature generation device 1 determines the stop activation-triggering criterion of stop generating motion signature is satisfied..

However, it is understood by those skilled in the art that the above the stop activation-triggering criterion only by way of example, other existing or potential the stop activation-triggering criterion that applicable to this invention should belong to the scope of protection of the invention by reference.

The software program of the present invention can be implemented by a processor to perform the steps or functions described hereinabove. Similarly, the software program of the present invention (including associated data structures) can be stored in the computer-readable recording media, for example, RAM memory, magneto-optical drive or floppy disk and similar devices. In addition, some steps or functions of the present invention may be implemented in hardware, such as implementation all steps or functions of the circuit by way of cooperating the processor.

In addition, part of the present invention may be applied as a computer program product, such as computer program instruction which can call or provide methods and/or technical solutions according to the invention by operating the computer when executed by a computer. The program instructions of the present invention calling method may be stored in fixed or removable recording media, and/or are transmitted in the data flow by radio or other signal bearing media, and/or stored in the working storage of the running computer equipment in accordance with the program instructions. Here, one embodiment of the present invention comprises an unit that can be used as a memory for storing computer program instructions and a processor for executing program instructions, wherein, when the computer program instructions being executed by the processor, trigger the device running according to the mentioned embodiments methods and/or technology programs of the present invention.

For skilled in the art, the present invention is clearly not limited to the details of the exemplary embodiments above, but without departing from the spirit or essential characteristics of the present invention, the present invention can be achieved in other specific forms. Therefore, whether from what point of view, the embodiments should be considered as exemplary and non-limiting, the scope of the present invention is defined by the attached claims rather than the above descriptions, therefore, the present invention intends to cover the meaning of claims equivalents and all the changes in the scope. Any reference signs of the claims should not be seen to restrict the referred claims. In addition, apparently the word "comprise" does not exclude other units or steps, the singular does not exclude the plurality. In the device claims, more units or devices can be realized through one unit or device by means of software or hardware. The words like "first", "second" etc. are used to express names but not any particular sequences.

**Claims**

1. A method for generating motion signature on the basis of motion signature information, comprising:

   Detecting whether or not the activation-triggering criterion for generation of the motion signature on the basis of the motion signature information is satisfied;
   When the activation-triggering criterion is satisfied, determining, on the basis of the detection of the motion that corresponds to the activation-triggering criterion, the motion signature information corresponding to the motion; and
   Encoding the motion signature information, and, generating the motion signature corresponding to the motion signature information.

2. A method as recited in claim 1, wherein the step of determining is executed by a sensor detecting device, wherein, the sensor detecting device comprises one of: (a) MEMS sensor, (b) two-dimensional image device, and (c) three-dimensional image device.

3. A method as recited in claim 1, wherein, the activation-triggering criterion comprises one of: (a) detecting a predetermined input target object from the captured initial image, and (b) detected a predetermined motion pattern from the captured motion image.

4. A method as recited in claim 1, wherein the activation-triggering criterion comprises detecting a predetermined input target object in a captured initial image, and detecting a predetermined motion pattern in the corresponding motion image of the input target object.

5. A method as recited in claim 3 or claim 4, wherein the initial image comprises the predetermined input target object, and further wherein the step of determining comprises:

   When the activation-triggering criterion is satisfied, obtaining the motion image information of the input target object; and
   Determining the motion image information of the input target object on the basis of the motion image information.

6. A method as recited in claim 5, wherein the motion signature information further comprises motion trail information of the input target object, and further wherein the step of encoding and generating comprises encoding the motion trail information and generating the motion signature corresponding to the motion trail information.

7. A method as recited in claim 5 or claim 6, wherein the step of encoding and generating comprises generating the motion signature by combining the motion signature information with the input target object information.

8. A method as recited in claim 7, wherein the object related information comprises one of: (a) hand information, (b) specific gesture information, and (c) light-emitting unit information under predetermined light-emitting mode.

9. A method as recited in claim 5, wherein the step the step of detecting comprises:

   Based on the predetermined image signature information, detecting whether or not the acquired initial image comprises the predetermined input target object, wherein the input target object corresponds to the image signature information.

10. A method as recited in claim 5, wherein the initial image comprises multiple input target objects, and further wherein the step of determining comprises obtaining the motion image information of every input target object, respectively, when the activation-triggering criterion is satisfied and thus determining the corresponding motion signature information, and further wherein the step of encoding and generating comprises encoding all the motion signature information corresponding to every input target object and generating the motion signature of multiple input target objects.

11. A method as recited in claims 1 through 10, wherein the method comprises reducing the dimension of the motion signature information to obtain the motion signature information after dimension reduction, and further wherein the step of encoding and generating comprises encoding the dimension reduced motion signature information and generating the motion signature of the input target object.

**12.** A method as recited in claim 11, wherein the step of reducing comprises reducing the motion signature information from the three-dimensional space into the two-dimensional plane, wherein the two-dimensional plane comprises one of: (a) image acquisition plane, (b) two-dimensional fitting plane, (c) vertical fitting plane, and (d) direction towards the equipment fitting plane.

**13.** A method as recited in claims 1 through 12, wherein the motion signature information comprises one of: (a) prominent signature information, (b) global signature information and (c) trend information.

**14.** A method as recited in claims 1 through 13, wherein the step of encoding and generating comprises:

Based on the motion signature information and its additional information, generating the corresponding motion signature accordingly; and
Providing the motion signature to the corresponding processing application.

**15.** A method as recited in claim 14, wherein the additional information comprises one of: (a) identification information of the motion signature information and (b) auxiliary information of the motion signature information.

**16.** A method as recited in claims 1 through 15, wherein the encoding process comprises one of: (a) encoding form conversion process, (b) encoding packing process, (c) encoding compression process, and (d) encoding encryption process.

**17.** A method as recited in claims 1 through 16, wherein the method comprises:

Detecting whether or not the stop activation-triggering criterion for stop generation of the motion signature is satisfied, and if it is satisfied, the notice information of the stop generation motion signature shall be provided, wherein the stop activation-triggering criterion comprises one of:

Getting the predetermined stop activation-triggering information for stop generation of the motion signature;
Detecting the predetermined motion mode corresponding to the stop generation motion signature in the motion image; and
The generated motion signature satisfying the predetermined stop criterion.

**18.** A motion generation device for generating motion signature on the basis of motion signature information, the device comprising:

A detection unit which detects whether or not an activation-triggering criterion for generation of the motion signature on the basis of the motion signature information is satisfied.
A determination unit which, when the activation-triggering criterion is satisfied, determinates, on the basis of the detection of the motion that corresponds to the activation-triggering criterion, the motion signature information corresponding to the motion; and
A generation unit which encodes the motion signature information and generates the motion signature corresponding to the motion signature information.

**19.** A device as recited in claim 18, wherein the determination unit comprises a sensor detecting device, further wherein the sensor detecting comprises one of: (a) MEMS sensor, (b) two-dimensional image device and (c) three-dimensional image device.

**20.** A device as recited in claim 18, wherein the activation-triggering criterion comprises one of:

Detecting a predetermined input target object from the captured initial image; and
Detecting a predetermined motion pattern from the captured motion image.

**21.** A device as recited in claim 18, wherein the activation-triggering criterion comprises detecting the predetermined input target object in the captured initial image, and detecting the predetermined motion pattern in the corresponding motion image of the input target object.

**22.** A device as recited in claim 20 or claim 21, wherein the initial image comprises the predetermined input target object, and wherein the determination unit comprises:

An obtaining unit which, when the activation-triggering criterion is satisfied, obtains the motion image information of the input target object; and
A determining unit which determines the motion signature information of the input target object on the basis of the motion image information.

**23.** A device as recited in claim 22, wherein the motion signature information further comprises motion trail information of the input target object, and wherein the generation device encodes the motion trail information and generates the motion signature corresponding to the motion trail information.

**24.** A device as recited in claim 22 or claim 23, wherein the generation device generates the motion signature by combining the motion signature information with the input target object information.

25. A device as recited in claim 24, wherein the object related information comprises one of: (a) hand information, (b) specific gesture information and (c) light-emitting unit information under predetermined light-emitting mode.

26. A device as recited in claim 25, wherein the detection unit, based on the predetermined image signature information, detects whether or not the acquired initial image comprises the predetermined input target object, wherein the input target object corresponds to the image signature information.

27. A device as recited in claim 25, wherein the initial image comprises multiple input target objects, and wherein the determination unit, when the activation-triggering criterion is satisfied, obtains the motion image information of every input target object respectively, and thus determining the corresponding motion signature information, and further wherein the generation unit encodes all the motion signature information corresponding to every input target object and generating the motion signature of multiple input target objects.

28. A device as recited in claims 18 through 27, wherein the device further comprises a dimension reduction unit which reduces the dimension of the motion signature information to obtain the motion signature information after dimension reduction, and wherein the generation unit encodes the dimension reduced motion signature information and generates the motion signature of the input target object.

29. A device as recited in claim 28, wherein the dimension reduction unit reduces the motion signature information from the three-dimensional space into the two-dimensional plane, wherein the two-dimensional plane comprises one of: (a) image acquisition plane, (b) two-dimensional fitting plane, (c) vertical fitting plane, and (d) direction towards the equipment fitting plane.

30. A device as recited in claims 18 through 29, wherein the motion signature information comprises one of: (a) prominent signature information, (b) global signature information and (c) trend information.

31. A device as recited in claims 18 through 30, wherein the generation device generates the motion signature by combining the motion signature information with the input target object information and provides the motion signature to the corresponding processing application.

32. A device as recited in claim 31, wherein the additional information comprises one of: (a) identification information of the motion signature information and (b) auxiliary information of the motion signature information.

33. A device as recited in claims 18 through 32, wherein the encoding process as described comprises one of: (a) encoding form conversion process, (b) encoding packing process, (c) encoding compression process, and (d) encoding encryption process.

34. A device as recited in claims 18 through 33, wherein the device further comprises a stop unit which detects whether or not the stop activation-triggering criterion for stop generation of the motion signature is satisfied, and if it is satisfied, provides the notice information of the stop generation motion signature, wherein the stop activation-triggering criterion comprises one of:

Getting the predetermined stop activation-triggering information for stop generation of the motion signature;
Detecting the predetermined motion mode corresponding to the stop generation motion signature in the motion image; and
The generated motion signature satisfying the predetermined stop criterion.

101

101 the detection unit

102

102 the determination unit

103

103 the generation unit

the motion generation device 1

**FIGURE 1**

```
┌─────────────────────────────────────────────────────┐
│                                        ⌐201          │
│              ┌──────────────────────────┐            │
│     ──────▶  │ 201 the detection unit   │            │
│              └──────────────────────────┘            │
│                           │                          │
│                           ▼            ⌐202          │
│              ┌──────────────────────────┐            │
│              │ 202 the determination unit│           │
│              └──────────────────────────┘            │
│                           │                          │
│                           ▼            ⌐203          │
│              ┌──────────────────────────┐            │
│     ◀──────  │ 203 the generation unit  │            │
│              └──────────────────────────┘            │
│                           │                          │
│                           ▼            ⌐204          │
│              ┌──────────────────────────┐            │
│              │ 204 the stop unit        │            │
│              └──────────────────────────┘            │
│                                                      │
│              the motion generation device 1         │
└─────────────────────────────────────────────────────┘
```

FIGURE 2

```
                              ┌───────────┐
                             (    Start    )
                              └─────┬─────┘
                                    │              S301
                                    ▼
┌──────────────────────────────────────────────────────────────────┐
│ S301 detection of whether or not the activation-triggering criterion for │
│ generation of the motion signature on the basis of the motion signature  │
│ information is satisfied.                                           │
└──────────────────────────────────────────────────────────────────┘
                                    │              S302
                                    ▼
┌──────────────────────────────────────────────────────────────────┐
│ S302 when the activation-triggering criterion is satisfied, determination, │
│ on the basis of the detection of the motion that corresponds to the │
│ activation-triggering criterion, of the motion signature information │
│ corresponding to the motion.                                       │
└──────────────────────────────────────────────────────────────────┘
                                    │              S303
                                    ▼
┌──────────────────────────────────────────────────────────────────┐
│ S303 encoding of the motion signature information, and, generation of the │
│ motion signature corresponding to the motion signature information. │
└──────────────────────────────────────────────────────────────────┘
                                    │
                                    ▼
                              ┌───────────┐
                             (     End     )
                              └───────────┘
```

**FIGURE 3**

23

Start

S401

S401 detection of whether or not the activation-triggering criterion for generation of the motion signature on the basis of the motion signature information is satisfied.

S402

S402 when the activation-triggering criterion is satisfied, determination, on the basis of the detection of the motion that corresponds to the activation-triggering criterion, of the motion signature information corresponding to the motion.

S403

S403 encoding of the motion signature information, and, generation of the motion signature corresponding to the motion signature information.

S404

S404 detection of whether or not the stop activation-triggering criterion for stop generation of the motion signature on the basis of the motion signature information is satisfied, if it is satisfied, the notice information of the stop generation motion signature shall be provided.

End

FIGURE 4

**EP 2 996 067 A1**

# INTERNATIONAL SEARCH REPORT

| International application No. |
|---|
| PCT/CN2014/076800 |

## A. CLASSIFICATION OF SUBJECT MATTER

G06 K 9/00 (2006.01) i

According to International Patent Classification (IPC) or to both national classification and IPC

## B. FIELDS SEARCHED

Minimum documentation searched (classification system followed by classification symbols)

G06K 9/-; H04N 7/-

Documentation searched other than minimum documentation to the extent that such documents are included in the fields searched

Electronic data base consulted during the international search (name of data base and, where practicable, search terms used)

VEN, DWPI, CPRS, CNKI, PATENTICS: action, feature, extract, compare, identify, code, encode, encrypt, image, sensor, gesture, sign, motion, track, path

## C. DOCUMENTS CONSIDERED TO BE RELEVANT

| Category* | Citation of document, with indication, where appropriate, of the relevant passages | Relevant to claim No. |
|---|---|---|
| X | CN 101299812 A (BEIJING VIMICRO CORP.) 05 November 2008 (05.11.2008) description, page 6 line 3 to page 10 line 24 | 1, 3-7, 10, 16, 18, 20-24, 27, 33 |
| Y | CN 101299812 A (BEIJING VIMICRO CORP.) 05 November 2008 (05.11.2008) description, page 6 line 3 to page 10 line 24 | 2, 8, 9, 19, 25, 26 |
| A | CN 101299812 A (BEIJING VIMICRO CORP.) 05 November 2008 (05.11.2008) description, page 6 line 3 to page 10 line 24 | 11-15, 17, 28-32, 34 |
| Y | CN 102307309 A (UNIV HANGZHOU DIANZI) 04 January 2012 (04.01.2012) description, paragraphs [0015] to [0018] | 2, 8, 9, 19, 25, 26 |
| A | CN 102693084 A (SHANGHAI DINGWEI SOFTWARE TECHNOLOGY CO LTD) 26 September 2012 (26.09.2012) see the whole document | 1-34 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 August 2014 | 15 August 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer TIAN, Jing Telephone No. (86-10) 62089417 |
|---|---|

Form PCT/ISA /210 (second sheet) (July 2009)

## INTERNATIONAL SEARCH REPORT
### Information on patent family members

| | International application No. |
|---|---|
| | PCT/CN2014/076800 |

| Patent Documents referred in the Report | Publication Date | Patent Family | Publication Date |
|---|---|---|---|
| CN 101299812 A | 05 November 2008 | CN 101299812 B | 05 December 2012 |
| CN 102307309 A | 04 January 2012 | None | |
| CN 102693084 A | 26 September 2012 | None | |

Form PCT/ISA/210 (patent family annex) (July 2009)